# EUROPÄISCHE PATENTANMELDUNG

(11) **EP 3 933 352 A1**
(43) Veröffentlichungstag der Anmeldung: **05.01.2022**
(21) Anmeldenummer: 20183411.6
(22) Anmeldetag: 01.07.2020
(51) Int. Cl.: G01F 1/684

(54) **THERMISCHE DURCHFLUSSMESSUNG**

(71) Anmelder: SICK AG, 79183 Waldkirch (DE)
(72) Erfinder: Albrecht, Jens, 79199 Kirchzarten (DE)

(57) **Zusammenfassung**

Es wird eine thermische Strömungsmessvorrichtung (10) zur Bestimmung des Durchflusses eines in einer Leitung (12) strömenden Fluids (14) angegeben, die ein erstes Heizelement (22), ein zweites Heizelement (26) und mindestens einen Temperaturfühler (24) sowie eine Steuer- und Auswertungseinheit (32) aufweist, die dafür ausgebildet ist, die beiden Heizelemente (22, 26) jeweils mit einer anhand einer Temperaturinformation des Temperaturfühlers (24) geregelten ersten Heizleistung und zweiten Heizleistung anzusteuern und den Durchfluss aus den Heizleistungen oder einer daraus abgeleiteten Größe zu bestimmen. Dabei ist das zweite Heizelement (26) in einem Referenzbereich (20) angeordnet, in dem sich nicht strömendes Fluid (14) befindet.

## Beschreibung

Die Erfindung betrifft eine thermische Strömungsmessvorrichtung und ein Verfahren zur thermischen Durchflussmessung eines in einer Leitung strömenden Fluids nach dem Oberbegriff von Anspruch 1 beziehungsweise 12.

Die thermische oder kalorimetrische Durchflussmessung basiert auf dem unterschiedlichen Wärmetransport eines strömenden Fluids je nach Strömungsgeschwindigkeit. Dazu werden Heizelemente und Temperaturfühler in der Strömung angeordnet. Die diversen bekannten Varianten unterscheiden sich in der Art der Sonden und deren Anordnung sowie im Messverfahren.

Bei der Hitzedrahtanemometrie wird ein dünner Draht verwendet. Das Verfahren ist für schnelle lokale Durchflussschwankungen bei Atmosphärendruck geeignet, jedoch sehr anfällig gegenüber Verschmutzung. Alternative Bauweisen der Sonden in Dünnfilm-technologie sorgen für eine größere Robustheit. Auch metallische Sonden sind bekannt, erhöhen jedoch deutlich die Ansprechzeit.

Hinsichtlich der eingebrachten Wärme gibt es unterschiedliche Regelungskonzepte. Im CCA-Verfahren (Constant Current Anemometry) wird das Heizelement einfach mit einem konstanten Strom beauftragt, und es gibt weder eine elektronische noch eine thermische Regelung. Eine etwas komplexere Ansteuerung ist das CPA-Verfahren (Constant Power Anenometry), bei der eine elektronische Regelung der Heizleistung vorgesehen ist. Ein Nachteil hieran ist, dass bei Ausbleibender Wärmeabfuhr im Falle eines ruhenden Fluids das Heizelement überhitzen kann. In dem CTA-Verfahren (Constant Temperature Anenometry) ist sowohl eine elektronische als auch eine thermische Regelung implementiert.

Das zuletzt genannte CTA-Verfahren soll noch etwas genauer betrachtet werden. Das im Fluidstrom positionierte Heizelement wird auf eine definierte Übertemperatur oder Temperaturdifferenz gegenüber der Temperaturmessung eines separaten Temperaturfühlers geregelt. Um die Temperaturdifferenz überhaupt beurteilen zu können, wird zusätzlich die Temperatur an dem Heizelement mit einem integrierten oder dort angeordneten weiteren Temperaturfühler bestimmt. Der Massenstrom ist eine Funktion der benötigten Heizleistung, um eine geforderte Temperaturdifferenz zwischen Heizelement und Temperaturfühler einzuhalten. Die Kennlinie, d.h. der Zusammenhang zwischen Heizleistung und Massenstrom, ist in etwa quadratisch, hängt aber aufgrund vielfältiger strömungsmechanischer Effekte von mehreren Faktoren ab.

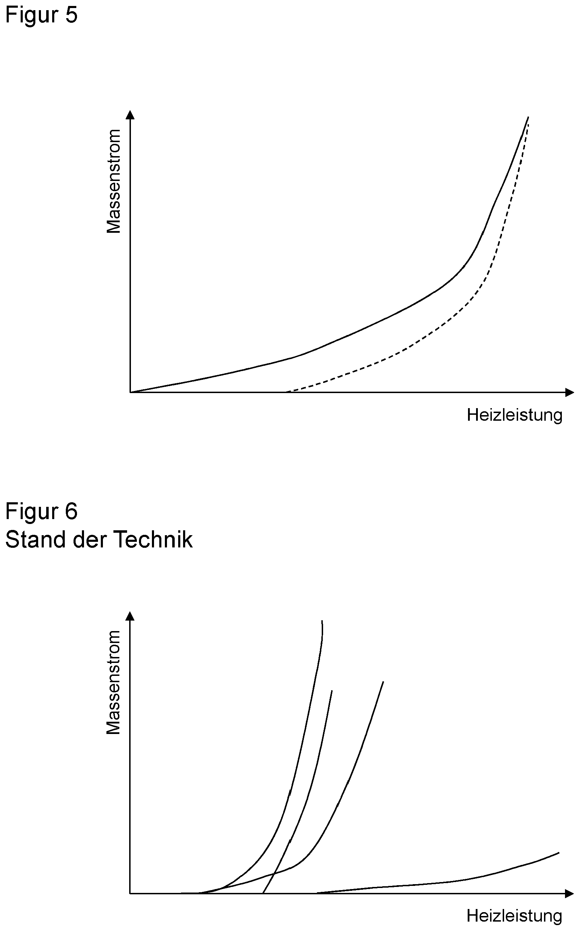

Figur 6 zeigt rein schematisch einige Kennlinien für verschiedene Gase. Ähnliche Variationen ergeben sich auch, wenn statt oder neben der Gasart der Druck, die Feuchte, die Temperatur oder die Anordnung der Heizelemente und Temperaturfühler verändert wird. Für einige dieser Abhängigkeiten wie unterschiedliche Gasarten ist eine Kalibration der Kennlinie möglich und nötig. Besonders störend ist jedoch, dass sich dabei jeweils der Heizleistungsursprung der Kennlinie bei Nulldurchfluss verschiebt, also einem ruhenden Fluid mit Strömungsgeschwindigkeit Null. Wird also beispielsweise ein thermischer Durchflussmesser bei sieben Bar kalibriert, jedoch bei 16 Bar eingesetzt, dann führt der erhöhte Wärmeabtrag durch den höheren Druck zu einem Messausschlag, obwohl tatsächlich kein Durchfluss vorliegt.

Nun könnte auch auf jedes Druckniveau und jede Temperatur kalibriert und die Nullverschiebung softwareseitig korrigiert werden. Das erfordert einen enormen Kalbrieraufwand, der sogar individuell je Gerät durchzuführen ist, wenn nicht Sonden mit ganz geringer Streuung ihrer thermischen Eigenschaften genutzt werden. Manche Einflüsse wie eine Lageabhängigkeit bezüglich der Anordnung der Sonden oder Feuchte könnten dennoch nicht korrigiert werden.

Durch den deutlichen Wärmeabtrag bereits bei Nulldurchfluss geht zudem Auflösung bei der Analog-Digital-Konvertierung verloren. Das könnte durch Bilden von Differenzen zu einer Referenzspannung beziehungsweise einem Referenzstrom verbessert werden, aber auch das funktioniert nur, wenn der Nullpunkt nicht oder nur geringfügig driftet.

Besonders genaue Ergebnisse ließen sich mit dem Bypass-Messprinzip erzielen, bei dem eigens für die thermische Durchflussmessung ein paralleler Strömungsweg geschaffen wird. Mit diesem Messprinzip werden auch unterschiedliche Gase und Gaseigenschaften abgedeckt. Es bringt jedoch deutliche Mehrkosten und einen höheren Druckverlust mit sich.

Aus der DE 2013 114 486 A1 ist ein thermischer Strömungssensor bekannt, der zwei beheizbare Temperatursensoren beziehungsweise Paare von Temperatursensoren und Heizelementen aufweist. Durch Layout- und Fertigungstoleranzen sowie Inhomogenitäten in Substrat und Schichtaufbau dieser Elemente kann es zu einer Nullpunktverschiebung kommen, die durch einen Abgleich ausbalanciert wird. Messeinflüsse durch unterschiedliche Fluide, Umgebungsbedingungen und dergleichen betrifft diese Abgleich jedoch nicht.

Die DE 10 2013 114 424 A1 offenbart einen thermischen Durchflussmesser mit zwei Bereichen unterschiedlichen Kanalquerschnitts, in denen jeweils ein Heizelement angeordnet wird. Durch die unterschiedlichen Strömungsverhältnisse ergeben sich Signalunterschiede, die für die Ermittlung von Messartefakten genutzt werden. Die Verengung des Kanalquerschnitts erfordert jedoch einen recht hohen konstruktiven Aufwand und kann zu unerwünschten Effekten auf die Strömung führen.

Die EP 0 943 900 A1 offenbart einen Durchflussmesser mit zwei Temperaturmess- und Heizelementen, zwischen denen die Temperaturdifferenz auf Null geregelt wird. Die dafür erforderliche Leistungsverteilung wird ausgewertet, wobei Parameter des strömenden Mediums wie Dichte und Wärmekapazität berücksichtigt werden. Die Temperaturmess- und Heizelemente sind jeweils der Strömung ausgesetzt.

In der US 9 835 487 B2 werden zwei verschiedene Temperaturdifferenzen an Sonden eines thermischen Durchflussmessers eingestellt, um so auf Eigenschaften des strömenden Fluids wie eine Wasserdampfphase zu schließen.

Es ist daher Aufgabe der Erfindung, eine robustere thermische Durchflussmessung anzugeben.

Diese Aufgabe wird durch eine thermische Strömungsmessvorrichtung und ein Verfahren zur thermischen Durchflussmessung eines in einer Leitung strömenden Fluids nach Anspruch 1 beziehungsweise 12 gelöst. Nach dem Grundprinzip der thermischen oder kalorimetrischen Durchflussmessung wird die Strömungsgeschwindigkeit der Strömung in einer Leitung bestimmt. Die Bezeichnung der Messgröße als Strömungsgeschwindigkeit ist etwas vereinfachend. Strenggenommen wird die lokale Massenstromdichte und daraus der Massenstrom bestimmt. Auf diese Unterschiede kommt es aber nicht an, und daher wird weiterhin von der Strömungsgeschwindigkeit gesprochen. Weiterhin ist der Bereich der Leitung, in dem gemessen wird, häufig durch die Strömungsmessungsvorrichtung ersetzt, die in die Leitung eingebaut ist. Dieser Abschnitt der Strömung könnte also als Sonde bezeichnet werden, oder als Teil der Strömungsmessungsvorrichtung. Auch auf diesen Unterschied wird nicht weiter eingegangen und vereinfachend die Bezeichnung Leitung weiterverwendet.

In Kenntnis der Geometrie der Leitung und des Fluids ist die Strömungsgeschwindigkeit und der Massendurchfluss ineinander umrechenbar. Als Sonden für die Messung sind ein erstes Heizelement, ein zweites Heizelement und mindestens ein Temperaturfühler vorgesehen. Das erste Heizelement und der Temperaturfühler sind in der Strömung angeordnet. Eine Steuer- und Auswertungseinheit regelt die jeweilige Heizleistung der Heizelemente anhand der von dem Temperaturfühler gemessenen Temperaturinformation. Die jeweilige Regelgröße für die beiden Heizleistungen wird somit aus der Temperaturinformation aufgefunden. Der Durchfluss wird aus den Heizleistungen beziehungsweise einer daraus abgeleiteten Größe bestimmt. Es kann also eine Funktion oder sonstige Zuordnung in Abhängigkeit der beiden Heizleistungen geben, die einen oder mehrere abgeleitete Größen liefert, die dann wiederum der eigentlichen Bestimmung zugrunde gelegt werden.

Die Erfindung geht von dem Grundgedanken aus, das zweite Heizelement als Referenzheizelement aus der Strömung zu nehmen und in einem Referenzbereich ohne Strömung unterzubringen. In dem Referenzbereich ist das Fluid auch vorhanden, der Referenzbereich ist vorzugsweise mit der Leitung verbunden. Das Fluid ist dort jedoch von der Strömung abgeschirmt und strömt dort nicht. Das Referenzheizelement ist demnach Eigenschaften wie dem Druck oder der Temperatur des Fluids ebenfalls ausgesetzt, nur dass das Fluid sich nicht bewegt. Deshalb kann das thermische Verhalten bei Nulldurchfluss als Referenz bestimmt werden. Die Referenzmessung wird umso genauer, je vollständiger die Strömung des Fluids in dem Referenzbereich tatsächlich zum Erliegen kommt. Dennoch ist eine Strömung Null durch den mindestens mittelbaren Kontakt mit dem strömenden Fluid in der Leitung praktisch nicht vollständig zu verhindern. Eine Strömungsgeschwindigkeit, die in diesen praktischen Grenzen im Wesentlichen so klein wie möglich bleibt, kann deshalb noch als ruhend angesehen werden.

Die Erfindung hat den Vorteil, dass ein automatischer Nullpunktabgleich während des Betriebs ermöglicht wird. Abhängigkeiten der Kennlinie von Gaseigenschaften werden auf diese Weise kompensiert. Zugleich kann dank des Nullpunktabgleichs die thermische Messspanne in eine größere elektrische Messspanne übersetzt werden. Die vorhandene Messauflösung wird dadurch besser ausgenutzt. Es geht keine ADC-Auflösung dafür verloren, die Verschiebung des Nullpunkts zu codieren. Die Erfindung ist besonders geeignet für Sonden, d.h. Heizelemente und Temperaturfühler, in Dünnfilmtechnologie sowie den CTA-Regelmodus.

Der Referenzbereich ist vorzugsweise als Kavität in einer Wandung der Leitung ausgebildet. Eine solche Kavität oder Tasche in der Leitungswand sorgt dafür, dass das zweite Heizelement der Strömung nicht ausgesetzt ist. Zugleich bleibt das zweite Heizelement dort in Kontakt mit dem Fluid, das insbesondere eine gleiche Zusammensetzung, gleiche Temperatur und einen gleichen Druck aufweist wie das strömende Fluid. Dadurch wird eine passende Referenz gebildet.

Die Steuer- und Auswertungseinheit ist bevorzugt dafür ausgebildet, eine Heizleistung eines Heizelements so zu regeln, dass die Temperatur an dem Heizelement um eine vorgegebene Temperaturdifferenz von der Temperaturinformation abweicht. Die Regelung sorgt somit für eine definierte Übertemperatur oder Temperaturdifferenz an dem Heizelement gegenüber der Temperatur an dem Temperaturfühler. Das entspricht dem einleitend erläuterten CTA-Verfahren (Constant Temperature Anemometry).

Die Steuer- und Auswertungseinheit ist bevorzugt dafür ausgebildet, die erste Heizleistung und die zweite Heizleistung so zu regeln, dass die Temperatur an dem ersten Heizelement und an dem zweiten Heizelement um dieselbe Temperaturdifferenz von der Temperaturinformation abweicht. Die Regelung auf eine definierte Übertemperatur oder Temperaturdifferenz betrifft in dieser Ausführungsform sowohl das erste Heizelement als auch das zweite Heizelement. Außerdem wird jeweils auf dieselbe Temperaturdifferenz geregelt. Die Referenzmessung des zweiten Heizelements wird damit unmittelbar vergleichbar und sorgt für einen besonders guten Nullpunktabgleich.

Die Steuer- und Auswertungseinheit ist bevorzugt dafür ausgebildet, den Durchfluss aus der um die zweite Heizleistung kompensierte ersten Heizleistung zu bestimmen, insbesondere der Differenz erste Heizleistung minus zweite Heizleistung. Die erste Heizleistung wird also vorab um die zweite Heizleistung korrigiert. Dafür genügt besonders bevorzugt eine einfache Differenzbildung. Eine geeignete Voraussetzung dafür ist die jeweilige Regelung auf dieselbe Temperaturdifferenz. Der gesuchte Durchfluss oder Massenstrom lässt sich als Funktion der Differenzheizleistung auffinden, beispielsweise über eine entsprechende Kennlinie. Der Nullpunkt verschiebt sich im Gegensatz zum Stand der Technik bei Veränderungen wie Druck-, Temperatur- oder Gaszusammensetzungsänderungen nicht mehr, da dies in der Differenzheizleistung bereits berücksichtigt wird. Die Kennlinien beginnen auch nach solchen Veränderungen im Nullpunkt.

Die Steuer- und Auswertungseinheit weist bevorzugt analoge Schaltungselemente auf, mit denen eine Differenz zwischen erster Heizleistung und zweiter Heizleistung gemessen wird. Damit wird die Kompensation unmittelbar im Frontend durch eine einfache Schaltung vorgenommen. Weitere Auswertungsschritte sind diesbezüglich dann nicht mehr erforderlich. Der Aufwand ist äußerst gering, und der Nullpunktabgleich ist stets automatisch schon vorgenommen.

Die analogen Schaltungselemente weisen bevorzugt einen Zweig für eine Strommessung, in dem ein durch das zweite Heizelement fließender Strom von einem durch das erste Heizelement fließenden Strom abgezogen wird, und/oder einen Zweig für eine Spannungsmessung auf, in dem eine an dem zweiten Heizelement anliegender Spannung von einer an dem ersten Heizelement anliegenden Spannung abgezogen wird. Die Messung von Stromstärke und Spannung ergibt die eigentlich gesuchte Heizleistung. So wird die Kompensation mit ganz üblichen Schaltungselementen möglich. In beiden Zweigen kann beispielsweise ein einfaches Summierglied vorgesehen sein, an dessen einen Eingang jeweils der Strom oder die Spannung des ersten Heizelements und an dessen zweitem Eingang entsprechend der negierte Strom oder die negierte Spannung des zweiten Heizelements anliegt.

Das erste Heizelement und/oder das zweite Heizelement weist bevorzugt einen Temperaturfühler auf. Diese Temperaturfühler können in das jeweilige Heizelement integriert oder als separate Bauelemente bei dem Heizelement angeordnet sein. Die jeweiligen Temperaturmessungen werden für die Regelung der Heizleistung verwendet.

Die beiden Heizelemente sind bevorzugt zu beiden Seiten des Temperaturfühlers angeordnet, insbesondere im selben Abstand. Anders ausgedrückt bilden erstes Heizelement, Temperaturfühler und zweites Heizelement eine Reihenanordnung, die vorzugsweise äquidistant ist. Dadurch sind besonders günstige Referenzmessungen zu erwarten. Eine äquidistante Anordnung sorgt für vergleichbare Verhältnisse.

Die Heizelemente und der Temperaturfühler sind bevorzugt in einer Querrichtung der Leitung übereinander angeordnet. Herkömmlich werden die verschiedenen Elemente meist mit einem Versatz in Strömungsrichtung angeordnet, das ist in dieser Ausführungsform anders. Das zweite Heizelement soll möglichst vergleichbare Bedingungen vorfinden. Der Begriff "übereinander" ist rein anschaulich gemeint, tatsächlich hängt dies erheblich von der Orientierung der Leitung und deren Drehung um ihre Längsachse ab.

Das erste Heizelement, das zweite Heizelement und/oder der mindestens eine Temperaturfühler ist bevorzugt in Dünnfilmtechnik hergestellt. Dadurch ergeben sich günstige und zugleich verlässliche und robuste Bauteile, die ein reproduzierbares Heizen beziehungsweise Temperaturmessen ermöglichen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Längsschnittdarstellung eines thermischen Durchflussmessers in einer Leitung mit darin strömendem Fluid;
- Fig. 2: eine Querschnittsdarstellung des thermischen Durchflussmessers gemäß Figur 1;
- Fig. 3: eine Blockdarstellung der funktionalen Elemente eines thermischen Durchflussmessers;
- Fig. 4: eine schematische Schaltungsdarstellung zur Bestimmung der durch eine Referenzheizleistung kompensierten Heizleistung in einem thermischen Durchflussmesser;
- Fig. 5: eine Darstellung der Kennlinie eines thermischen Durchflussmessers nach erfindungsgemäßem Nullpunktabgleich gegenüber einer herkömmlichen Kennlinie mit Nullpunktverschiebung; und
- Fig. 6: eine schematische vergleichende Darstellung mehrerer herkömmlicher Kennlinien verschiedener Gasarten mit jeweiliger Nullpunktverschiebung.

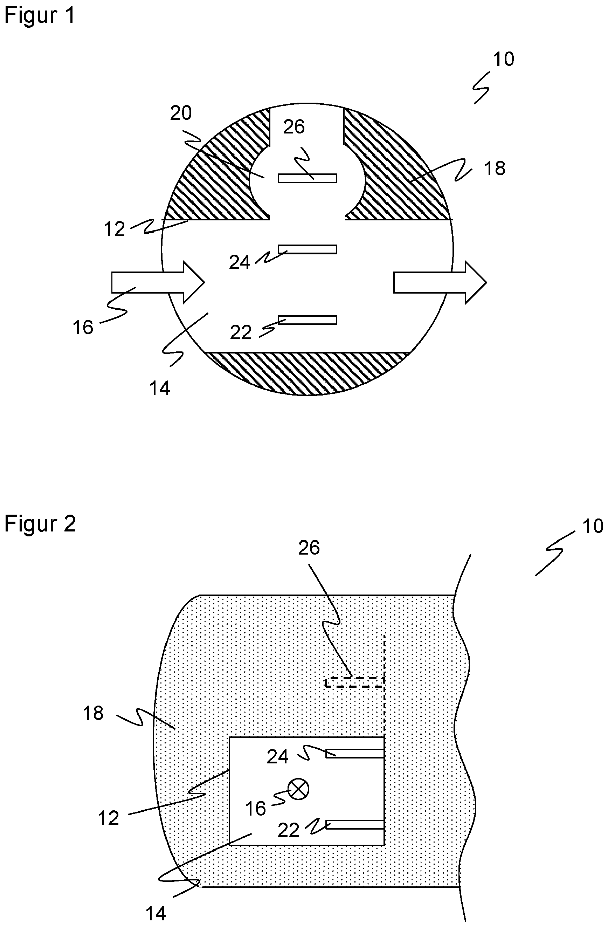

Figur 1 zeigt in einer Längsschnittdarstellung und Figur 2 in einer entsprechenden Querschnittsdarstellung einen kalorimetrischen oder thermischen Durchflussmesser 10, der in einer Leitung 12 angeordnet ist, in dem ein Fluid 14 in der durch den Pfeil bezeichneten Strömungsrichtung 16 strömt. In einer Leitungswand 18 ist ein Referenzbereich 20 vorgesehen, der mit der eigentlichen Leitung 12 verbunden ist. In dem Referenzbereich 20 strömt das Fluid 14 nicht (Zero Flow, Strömungsgeschwindigkeit Null). Dazu können weitere nicht dargestellte strömungsberuhigende Maßnahmen ergriffen sein, wie Abschirmelemente oder eine besondere geometrische Gestaltung des Referenzbereichs 20.

Ein erstes Heizelement 22 und ein Temperaturfühler 24 sind zueinander beabstandet in der Strömung des Fluids 14 angeordnet. Ein zweites Heizelement oder Referenzheizelement 26 ist in dem Referenzbereich 20 angeordnet. Das Referenzheizelement 26 ist somit nicht der Strömung ausgesetzt, jedoch dem Fluid 14 mit gleicher Zusammensetzung und zumindest vergleichbaren, wenn nicht identischen Temperatur- und Druckbedingungen wie in der Strömung.

Die Geometrien von Leitung 12 und Leitungswand 18 sind rein beispielhaft zu verstehen, das erfindungsgemäße Messprinzip hängt davon nicht ab. Wie schon einleitend erläutert, sind Leitung 12 und Leitungswand 18 eine Durchführung der eigentlichen Leitung im Bereich des Durchflussmessers 10, der in jene Leitung eingebaut ist. Man könnte daher auch von einer Sonde statt der Leitung 12 und dementsprechend einer Sondenwand statt der Leitungswand 18 sprechen.

Auch der Referenzbereich 20 kann variiert werden. Es kommt hierfür vor allem darauf an, das Referenzheizelement 26 aus der Strömung zu nehmen, d.h. bei einer Strömungsgeschwindigkeit nahe oder im Idealfall gleich Null unterzubringen. Prinzipiell könnte demnach das Referenzheizelement 26 auch im eigentlichen Bereich der Leitung 12 hinter einer strömungsberuhigenden Abschirmung untergebracht sein. Das allerdings verändert die Strömung des Fluids 14, was nicht in allen Anwendungen toleriert würde. Die Messung selbst könnte davon unbeeindruckt bleiben, indem die Abschirmung stromabwärts des ersten Heizelements 22 liegt.

Die Anordnung von erstem Heizelement 22, Temperaturfühler 24 und Referenzheizelement 26 in einer Reihe hingegen ist vorteilhaft, um eine einfache Anordnung zu erhalten. Die Heizelemente 22, 26 sollten genügend Abstand aufweisen, um den Temperaturfühler 24 nicht zu beeinflussen. Weiterhin sind diese Elemente 22, 24, 26 vorzugsweise ohne Versatz zueinander in Längsrichtung der Leitung 12 und insbesondere übereinander angeordnet wie dargestellt. Das ermöglicht eine einfache Reihenanordnung unter Einbeziehung des Referenzbereichs 20 in der Leitungswand 18.

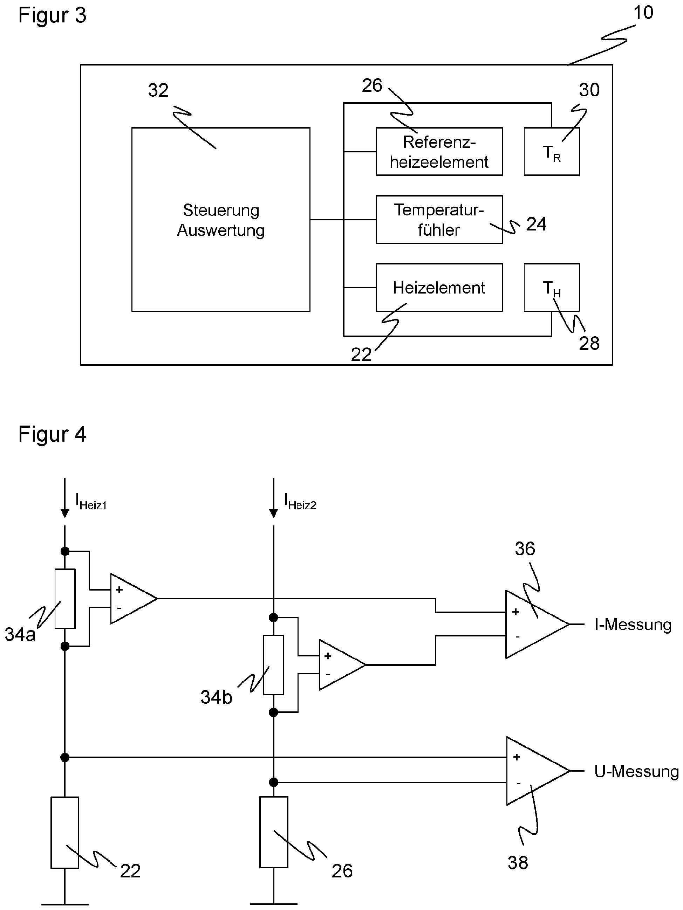

Figur 3 zeigt den thermischen Durchflussmesser 10 ein weiteres Mal nun in einer Blockdarstellung, um in den Figuren 1 und 2 vereinfachend weggelassene Elemente sowie die Verbindungen dazwischen zu erläutern. Dem ersten Heizelement 22 und dem Referenzheizelement 26 sind jeweils vorzugsweise weitere Temperaturfühler 28, 30 zugeordnet, deren Temperaturmessungen T_{H}, T_{R} für eine noch zu erläuternde Regelung der Heizleistung verwendet werden kann. Die Heizelemente 22, 26 und Temperaturfühler 24, 28, 30 sind vorzugsweise in Dünnschichttechnologie hergestellt.

Eine Steuer- und Auswertungseinheit 32 ist mit den Heizelementen 22, 26 und den Temperaturfühlern 24, 28, 30 verbunden, um die Temperaturmessungen auszuwerten, die Heizleistung zu steuern und eine Strömungsgeschwindigkeit oder einen Durchfluss des Fluids 14 zu bestimmen. Für die Durchflussmessung kommt prinzipiell jedes bekannte kalorimetrische Verfahren in Betracht. Durch das zusätzliche Referenzheizelement 26 können Einflüsse durch Eigenschaften des Fluids 14, wie dessen Zusammensetzung, Temperatur oder Druck, bei der Bestimmung des Durchflusses kompensiert werden. Insbesondere kann die Durchflussbestimmung auf der Differenzheizleistung zwischen erstem Heizelement 22 und Referenzheizelement 26 beruhen. Damit ist auch ein später zu Figur 5 zu erläuternder Nullpunktabgleich möglich.

Eine von der Steuer- und Auswertungseinheit 32 koordinierte und durchgeführte Strömungsmessung des Fluids 14 wird nun beispielhaft an einem CTA-Verfahren (Constant Temperature Anemometry) erläutert. Das erste Heizelement 22 und das Referenzheizelement 26 werden jeweils auf eine feste Übertemperatur geregelt, die aus der Temperaturinformation des Temperaturfühlers 24 abgeleitet ist. Anders ausgedrückt wird die Temperatur des unbeheizten Fluids 14 mit dem Temperaturfühler 24 gemessen und eine bestimmte Differenztemperatur dazu als Regelgröße vorgegeben. Das erste Heizelement 22 und das Referenzheizelement 26 werden jeweils geregelt mit einer ersten Heizleistung und einer zweiten Heizleistung betrieben, bei der dort eine Temperatur entsprechend der Summe aus Temperatur des unbeheizten Fluids 14 plus der vorgegebenen Differenztemperatur herrscht. Die Übertemperatur oder Differenztemperatur ist vorzugsweise an dem ersten Heizelement 22 und dem Referenzheizelement 26 dieselbe, um die Berechnungen einfach zu halten.

Es wird dann die Differenzheizleistung bestimmt, d.h. die Differenz erste Heizleistung minus zweite Heizleistung, und der Durchfluss aus eine Kennlinie oder Funktion des Durchflusses in Abhängigkeit von der Differenzheizleistung bestimmt. Das entspricht dem einleitend erläuterten CTA-Verfahren, jedoch mit dem Unterschied, dass die Abhängigkeit der Funktion oder Kennlinie nun zu der Differenzheizleistung und nicht zu der ersten Heizleistung besteht.

Figur 4 zeigt eine schematische Schaltungsdarstellung, wie die Differenzheizleistung in einer bevorzugten Ausführungsform durch einfache analoge Schaltungselemente direkt elektronisch abgegriffen werden kann. Alternativ ist natürlich auch möglich, die erste Heizleistung und die zweite Heizleistung getrennt zu messen und dann voneinander abzuziehen. Der Vorteil der verbesserten Auflösung bei einer nachgelagerten AD-Wandlung geht dabei jedoch verloren.

Die Heizleistung P wird entsprechen P=U*I über die Stromstärke I und die Spannung U gemessen. Es fließt in dem ersten Heizelement 22 ein Strom I_{Heiz1} und in dem Referenzheizelement 26 ein Strom I_{Heiz2}. Es ist vorteilhaft, in an sich bekannter Weise den Messbereich der Strommessung durch einen Shunt-Widerstand 34a-b zu erweitern. Die Messströme werden in einem Summierglied 36 analog aufaddiert, wobei der Messstrom von dem Referenzheizelement 26 zur Differenzbildung negativ eingeht. Der Differenzstrom wird dann gemessen und vorzugsweise zur weiteren digitalen Auswertung ADgewandelt. Entsprechend werden auch die Spannungen in einem Summierglied 38 voneinander abgezogen, und dann wird die Differenzspannung gemessen und digitalisiert.

Figur 5 illustriert einen durch die Kompensation mittels des Referenzheizelements 26 erreichten Nullpunktabgleich. Gezeigt ist mit durchgezogener Linie die Kennlinie des thermischen Durchflussmessers 10, also die Abhängigkeit des Massenstroms von der gemessenen Heizleistung. Das ist erfindungsgemäß die kompensierte Heizleistung, insbesondere die Differenzheizleistung. Zum Vergleich ist mit gestrichelter Linie die Kennlinie eines thermischen Durchflussmessers ohne Kompensation gezeigt, beispielsweise allein unter Verwendung der ersten Heizleistung. Im herkömmlichen Fall ergibt sich je nach Zusammensetzung des Fluids 14, dessen Temperatur und Druck und dergleichen eine Nullpunktverschiebung. Weitere herkömmlich dadurch variierende Kennlinienverläufe und unterschiedliche Nullpunktverschiebungen wurden einleitend schon zu Figur 6 erläutert.

Erfindungsgemäß wird somit eine optimierte Kennlinie erreicht, die unabhängig von Eigenschaften des Fluids 14 durch den Nullpunkt verläuft. Das Ergebnis ist eine automatische Anpassung des Nullpunktes. Dadurch, dass der Massenstrom eine Funktion der Differenzheizleistung ist, kann der Nullpunkt bei verändertem Druck, veränderter Temperatur oder sich ändernder Fluid- beziehungsweise Gaszusammensetzung nicht wegdriften. Es findet ein stetiger physikalischer Nullpunktabgleich statt. Zugleich wird die volle Auflösung eines ADCs für die Digitalisierung der gemessenen Heizleistung beziehungsweise Differenzheizleistung ausgenutzt. Dank des Nullpunktabgleichs liegt bei gemessener Differenzheizleistung Null tatsächlich auch eine Strömung Null vor, so dass keine Auslösung für die Codierung einer verschobenen Strömung Null verloren geht.

## Patentansprüche

1. Thermische Strömungsmessvorrichtung (10) zur Bestimmung des Durchflusses eines in einer Leitung (12) strömenden Fluids (14), die ein erstes Heizelement (22), ein zweites Heizelement (26) und mindestens einen Temperaturfühler (24) sowie eine Steuer- und Auswertungseinheit (32) aufweist, die dafür ausgebildet ist, die beiden Heizelemente (22, 26) jeweils mit einer anhand einer Temperaturinformation des Temperaturfühlers (24) geregelten ersten Heizleistung und zweiten Heizleistung anzusteuern und den Durchfluss aus den Heizleistungen oder einer daraus abgeleiteten Größe zu bestimmen,
**dadurch gekennzeichnet, dass** das zweite Heizelement (26) in einem Referenzbereich (20) angeordnet ist, in dem sich nicht strömendes Fluid (14) befindet.

2. Strömungsmessvorrichtung (10) nach Anspruch 1,
wobei der Referenzbereich (20) als Kavität in einer Wandung (18) der Leitung (12) ausgebildet ist.

3. Strömungsmessvorrichtung (10) nach Anspruch 1,
wobei die Steuer- und Auswertungseinheit (32) dafür ausgebildet ist, eine Heizleistung eines Heizelements (22, 26) so zu regeln, dass die Temperatur an dem Heizelement (22, 26) um eine vorgegebene Temperaturdifferenz von der Temperaturinformation abweicht.

4. Strömungsmessvorrichtung (10) nach Anspruch 3,
wobei die Steuer- und Auswertungseinheit (32) dafür ausgebildet ist, die erste Heizleistung und die zweite Heizleistung so zu regeln, dass die Temperatur an dem ersten Heizelement (22) und an dem zweiten Heizelement (26) um dieselbe Temperaturdifferenz von der Temperaturinformation abweicht.

5. Strömungsmessvorrichtung (10) nach einem der vorhergehenden Ansprüche,
wobei die Steuer- und Auswertungseinheit (32) dafür ausgebildet ist, den Durchfluss aus der um die zweite Heizleistung kompensierte ersten Heizleistung zu bestimmen, insbesondere der Differenz erste Heizleistung minus zweite Heizleistung.

6. Strömungsmessvorrichtung (10) nach einem der vorhergehenden Ansprüche,
wobei die Steuer- und Auswertungseinheit (32) analoge Schaltungselemente (34a-b, 36, 38) aufweist, mit denen eine Differenz zwischen erster Heizleistung und zweiter Heizleistung gemessen wird.

7. Strömungsmessvorrichtung (10) nach Anspruch 6,
wobei die analogen Schaltungselemente (34a-b, 36, 38) einen Zweig für eine Strommessung, in dem ein durch das zweite Heizelement (26) fließender Strom von einem durch das erste Heizelement (22) fließenden Strom abgezogen wird, und/oder einen Zweig für eine Spannungsmessung aufweisen, in dem eine an dem zweiten Heizelement (26) anliegender Spannung von einer an dem ersten Heizelement (22) anliegenden Spannung abgezogen wird.

8. Strömungsmessvorrichtung (10) nach einem der vorhergehenden Ansprüche,
wobei das erste Heizelement (22) und/oder das zweite Heizelement (26) einen Temperaturfühler (28, 30) aufweist.

9. Strömungsmessvorrichtung (10) nach einem der vorhergehenden Ansprüche,
wobei die beiden Heizelemente (22, 26) zu beiden Seiten des Temperaturfühlers (24) angeordnet sind, insbesondere im selben Abstand.

10. Strömungsmessvorrichtung (10) nach einem der vorhergehenden Ansprüche,
wobei die Heizelemente (22, 26) und der Temperaturfühler (24) in einer Querrichtung der Leitung (12) übereinander angeordnet sind.

11. Strömungsmessvorrichtung (10) nach einem der vorhergehenden Ansprüche,
wobei das erste Heizelement (22), das zweite Heizelement (26) und/oder der mindestens eine Temperaturfühler (24) in Dünnfilmtechnik hergestellt ist.

12. Verfahren zur thermischen Durchflussmessung eines in einer Leitung (12) strömenden Fluids (14), bei dem ein erstes Heizelement (22) und ein zweites Heizelement (26) jeweils mit einer anhand einer Temperaturinformation mindestens eins Temperaturfühlers (24) geregelten ersten Heizleistung und zweiten Heizleistung betrieben werden und die Strömungsgeschwindigkeit oder der Durchfluss aus den Heizleistungen oder einer daraus abgeleiteten Größe bestimmt wird,
**dadurch gekennzeichnet, dass** das zweite Heizelement (26) in einem Referenzbereich (20) angeordnet ist, in dem sich nicht strömendes Fluid (14) befindet.
